# EUROPÄISCHE PATENTSCHRIFT

(11) **EP 2 559 977 B1**
(45) Veröffentlichungstag und Bekanntmachung des Hinweises auf die Patenterteilung: **05.10.2016**
(21) Anmeldenummer: 12005736.9
(22) Anmeldetag: 07.08.2012
(51) Int. Cl.: G01F 15/18, G01F 1/84

(54) **Coriolis-Massedurchflussmessgerät**
Coriolis mass flow measuring device
Débitmètre massique Coriolis

(30) Priorität: 16.08.2011 DE 102011110165
(43) Veröffentlichungstag der Anmeldung: 20.02.2013
(73) Patentinhaber: Krohne AG, 4019 Basel (CH)
(72) Erfinder: Hussain, Yousif, Northampton NN3 3DA (GB); Wang, Tao, Canterbury, Kent CT2 9DG (GB)
(74) Vertreter: Gesthuysen, Michael

(56) Entgegenhaltungen:
- EP-A1- 0 239 679
- EP-A1- 0 271 605
- US-A- 4 127 028
- US-A- 5 663 509

## Beschreibung

Die Erfindung betrifft ein Coriolis-Massedurchflussmessgerät mit mindestens einem Messrohr zur Bildung eines Strömungskanals, mindestens einem Schwingungserzeuger und mindestens einem Schwingungsaufnehmer, wobei das Messrohr ein Einlassende, zwei Schwingungsabschnitte und ein Auslassende aufweist und zumindest abschnittsweise derart gebogen ist, dass zwei in im wesentlichen parallelen Ebenen verlaufende U- oder V-förmige Schwingungsabschnitte gebildet sind, und wobei die Schwingungsabschnitte durch den Schwingungserzeuger zu Schwingungen anregbar sind.

Coriolis-Massedurchflussmessgeräte sind seit langem in einer Vielzahl von Ausgestaltungen bekannt. Bei Massedurchflussmessgeräten, die auf dem Coriolis-Prinzip beruhen, wird das von einem Medium durchströmbare Messrohr oder die von einem Medium durchströmbaren Messrohre durch einen Schwingungserzeuger zu einer Schwingung angeregt, die vorzugsweise einer bestimmten Eigenfrequenz in Resonanzfrequenz entspricht. Ein- und auslaufseitig wirken sich Trägheitskräfte unterschiedlich auf das strömende Medium in dem zu Schwingungen angeregten Messrohr und damit auf das Messrohr selbst aus, so dass die Auslenkung des Messrohrs ein- und auslaufseitig unterschiedlich beeinflusst wird, so dass die ein- und auslaufseitig mit Schwingungsaufnehmern erfassten Schwingungen des Messrohrs eine Phasenverschiebung aufweisen, die ein unmittelbares Maß für den interessierenden Massedurchfluss ist. Mittels einer Auswerteelektronik wird aus der Phasenverschiebung die Messgröße, nämlich der Massedurchfluss, abgeleitet. Wenn ein Coriolis-Massedurchflussmessgerät in ein Rohrleitungssystem eingebaut wird, können externe Schwingungen auf das Messgerät übertragen werden und das Messergebnis negativ beeinflussen. Insbesondere bei kleinen Coriolis-Massedurchflussmessgeräten, die zur Messung von sehr geringen Durchflussmengen vorgesehen sind, ist ein solches Einkoppeln von externen Schwingungen problematisch.

Der Erfindung liegt daher die Aufgabe zugrunde, ein Coriolis-Massedurchflussmessgerät anzugeben, das für die Messung von sehr kleinen Durchflussmengen geeignet ist und gleichzeitig eine gesteigerte Unempfindlichkeit gegen externe Schwingungen aufweist.

Die zuvor hergeleitete und aufgezeigte Aufgabe ist bei einem gattungsgemäßen Coriolis-Massedurchflussmessgerät dadurch gelöst, dass der Strömungskanal mit Ausnahme des Einlassendes, der Schwingungsabschnitte, und des Auslassendes innerhalb eines Sockels verläuft. Das Messrohr dient zur Bildung mindestens eines Teils des Strömungskanals. Im Bereich der Schwingungsabschnitte ist das Messrohr U- oder V-förmig gebogen, so dass insgesamt zwei identische Schwingungsabschnitte gebildet sind, die durch den Schwingungserzeuger in gegenphasige Schwingungen versetzbar sind. Des Weiteren sind an den Schwingungsabschnitten die Schwingungsaufnehmer befestigt, die bei Massedurchfluss eine Phasendifferenz der Schwingungen erfassen, aus der die eigentliche Messgröße, der Massedurchfluss, abgeleitet wird.

Der Verlauf der Strömung im Strömungskanal ist so vorgesehen, dass die Schwingungsabschnitte gleichgerichtet von dem zu messenden Medium durchströmt werden. Der Sockel besteht vorzugsweise aus einem Material, das eine hohe Dichte und/oder gute Dämpfungseigenschaften aufweist. Mit Ausnahme des Einlassendes, der Schwingungsabschnitte und des Auslassendes verläuft der Strömungskanal vollständig innerhalb des massiven Sockels. Der Sockel ist das tragende Element des Coriolis-Massedurchflussmessgeräts, und an ihm ist das Messrohr befestigt. Die Schwingungsabschnitte befinden sich notwendigerweise außerhalb des Sockels, da ansonsten eine Schwingung nicht möglich wäre. Ferner sind auch das - vorzugsweise kurze - Einlassende und das - vorzugsweise kurze - Auslassende an zwei gegenüberliegenden Seiten des Sockels angeordnet und ragen aus diesem heraus, damit das Coriolis-Massedurchflussmessgerät in einem Rohrleitungssystem befestigt werden kann. Vorzugsweise weisen sowohl das Einlassende als auch das Auslassende einen Flansch auf, damit das Coriolis-Massedurchflussmessgerät vorteilhaft in einem Rohrleitungssystem befestigt werden kann. Alternativ sind aber auch andere dichtende Verbindungen, z.B. eine Schweißverbindung denkbar. Der Sockel besteht beispielsweise je nach Ausgestaltung aus einem Harz, einem rostfreien Stahl oder beispielsweise auch aus Blei.

Ziel der Erfindung ist es, das Messrohr, bzw. den Strömungskanal möglichst umfangreich innerhalb des Sockels vorzusehen, da dies den Vorteil hat, dass der Sockel im Betrieb des Durchflussmessgeräts als Bezugsmasse dient, die verhindert, dass Schwingungen von dem das Coriolis-Massedurchflussmessgerät umgebenden Rohrleitungssystem auf die Schwingungsabschnitte des Coriolis-Massedurchflussmessgeräts eingekoppelt werden bzw. von diesen auf das Coriolis-Massedurchflussmessgerät umgebende Rohrleitungssystem ausgekoppelt werden.

Ein weiterer Vorteil des erfindungsgemäßen Coriolis-Massedurchflussmessgeräts ist es, dass auf einen Strömungsteiler verzichtet werden kann, da lediglich ein einziger Strömungskanal gebildet ist, in dem nacheinander die U- oder V-förmigen Schwingungsabschnitte aufeinander folgen. Bei einem Coriolis-Massedurchflussmessgerät sind stets beide Schwingungsabschnitte V- oder U-förmig.

Das erfindungsgemäße Coriolis-Massedurchflussmessgerät ist dadurch gekennzeichnet, dass ein einziges Messrohr vorhanden ist und der Strömungskanal vollständig von dem Messrohr gebildet wird. Das Messrohr wird dabei derart gebogen, dass es vom Einlassende über die beiden U- oder V-förmigen Schwingungsabschnitte bis zu dem Auslassende vollständig einstückig ist, inklusive der zwischen den Hauptelementen Einlassende, Schwingungsabschnitte und Auslassende vorgesehenen und notwendigen Zwischenverteilerstrecken. Die Zwischenverteilerstrecken sorgen dafür, dass die Schwingungsabschnitte zwar nacheinander, jedoch gleichgerichtet von dem zu messenden Medium durchströmt werden.

Bei dem zuletzt beschriebenen Ausführungsbeispiel eines erfindungsgemäßen Coriolis-Massedurchflussmessgeräts wird das Messrohr derart von dem massiven Sockel umschlossen, dass lediglich die das Einlassende, die parallel verlaufenden Schwingungsabschnitte und das Auslassende freiliegend bleiben. Der Sockel liegt dabei eng an dem Messrohr an, so dass keine oder nur eine sehr geringe Schwingungsübertragung vom Einlassende auf die Schwingungsabschnitte bzw. vom Auslassende auf die Schwingungsabschnitte erfolgen kann. Der Sockel dient auch bei dieser Ausgestaltung als Bezugsmasse.

Die zuletzt beschriebene Ausführungsform eines erfindungsgemäßen Coriolis-Massedurchflussmessgeräts hat ferner den Vorteil, dass auch auf einen Strömungsteiler verzichtet werden kann, da die Strömung das Messrohr kontinuierlich vom Einlassende durch den ersten Schwingungsabschnitt und den zweiten Schwingungsabschnitt bis zum Auslassende durchströmt.

Die Herstellung eines erfindungsgemäßen Coriolis-Massedurchflussmessgeräts ist besonders einfach, da das Messrohr von dem Material des Sockels umgossen ist, so dass der Sockel das Messrohr fest anliegend umschließt. Das Messrohr, dass durch seine Form den vollständigen Strömungskanal definiert, ist von dem gegossenen Sockel umgeben, so dass der Sockel sämtliche Zwischenräume zwischen den Abschnitten des Messrohrs vollständig ausfüllt und das Messrohr fest anliegend umschließt. Lediglich das Anlassende, die beiden Schwingungsabschnitte und das Auslassende ragen aus dem Sockel heraus. Diese Ausführungsform bietet auch den Vorteil, dass der Sockel jede beliebige Form annehmen kann, bevorzugt sind jedoch rechtwinklige oder kreisförmige Formen.

Bei der zuvor beschriebenen Ausführungsform erfindungsgemäßer Coriolis-Massedurchflussmessgeräte muss bei der Wahl der Materialien darauf geachtet werden, dass sich das Messrohr nicht verformt, wenn es mit dem Material des Sockels umgossen wird.

Bei einer weiter bevorzugten Ausführungsform erfindungsgemäßer Coriolis-Massedurchflussmessgeräte ist eine gesteigerte Messgenauigkeit dadurch erreicht, dass die Schwingungsabschnitte des Messrohrs derart gebogen und angeordnet sind, dass die Schwingungsabschnitte des Messrohrs derart gebogen und angeordnet sind, dass die Öffnungsseiten der U- oder V-förmigen Schwingungsabschnitte in Richtung des Sockels orientiert sind. Bei dieser Ausführungsform sind die Schwingungsabschnitte derart orientiert, dass die Bögen der U- bzw. V-förmigen Schwingungsabschnitte aus dem Sockel herausragen und so die beiden parallel zueinander verlaufenden Schwingungsabschnitte bilden. Die breiteste Stelle der U- oder V-förmigen Schwingungsabschnitte ist somit im Bereich des Sockels vorgesehen und von diesem umschlossen. Die beiden Schwingungsabschnitte sind innerhalb des Sockels an ihren Öffnungsseiten strömungstechnisch miteinander verbunden, so dass die Strömung vom Austritt des ersten Schwingungsabschnitts in den Eintritt des zweiten Schwingungsabschnitts geleitet wird.

Erfindungsgemäße Coriolis-Massedurchflussmessgeräte lassen sich besonders vorteilhaft in ein Rohrleitungssystem integrieren, wenn das Messrohr derart gebogen und angeordnet ist, dass das Einlassende und das Auslassende koaxial zueinander verlaufen. Das Einlassende und das Auslassende befinden sich also auf einer gemeinsamen Achse, so dass derart ausgestaltete Coriolis-Massedurchflussmessgeräte auf einfache Weise in Rohrleitungssystemen positioniert werden können. Die zuletzt beschriebene Ausführungsform stellt einige Anforderungen an eine ausgeklügelte Biegegeometrie des Messrohrs, da neben den in zwei parallelen Ebenen verlaufenden U- oder V-förmigen Schwingungsabschnitten beim Biegen auch auf die Koaxialität des Einlassendes und des Auslassendes geachtet werden muss.

Eine andere Ausführungsform erfindungsgemäßer Coriolis-Massedurchflussmessgeräte ist dadurch gekennzeichnet, dass mit Ausnahme der Schwingungsschnitte des Messrohrs sämtliche Abschnitte des Messrohrs in einer gemeinsamen Ebene angeordnet sind. Bei dieser Ausgestaltung ist das einzige Messrohr, das den gesamten Strömungskanal definiert, derart gebogen, dass lediglich die Schwingungsabschnitte mit ihren U- oder V-förmigen Bereichen nach oben oder nach unten aus der gemeinsamen Ebene herausragen, jedoch alle anderen Abschnitte des Messrohrs innerhalb dieser Ebene angeordnet sind. Folglich liegen das Einlassende, die zwischen den Schwingungsabschnitten erforderlichen Zwischenverteilerstrecken und das Auslassende alle in einer gemeinsamen, vorzugsweise horizontalen Ebene, aus der die Schwingungsabschnitte herausragen. Bei dieser Ausführungsform des Messrohrs lässt sich auf einfache Weise der Sockel um das Messrohr herum anordnen.

Um das Coriolis-Massedurchflussmessgerät möglichst kompakt zu gestalten, hat es sich als vorteilhaft herausgestellt, wenn die Ebenen der Schwingungsabschnitte orthogonal zur Orientierung des Einlasses und des Auslasses verlaufen. Das Einlassende und das Auslassende ragen folglich wie eine Ebenennormale aus den Ebenen der Schwingungsabschnitte heraus. Dabei empfiehlt sich eine Realisierung derart, dass das Messrohr mit den Schwingungsabschnitten an zwei gegenüberliegenden Seiten in den Sockel eintritt. Bei dieser Ausführungsform ist der Sockel vorzugsweise als rechteckiger Quader ausgestaltet, so dass die Schwingungsabschnitte mit ihren Öffnungsseiten der U-oder V-Form den Sockel quer zu seiner Längsorientierung überragen, um dann an den gegenüberliegenden Seiten des Sockels in diesen einzutreten. Im Betriebsfall des Coriolis-Massedurchflussmessgeräts werden die Schwingungsabschnitte des Messrohres bei dieser Ausführungsform insbesondere im Bereich der horizontal aus den Seiten des Sockels heraustretenden Bereiche durch die Schwingung tordiert, während beispielsweise bei einer parallelen Anordnung der Schwingungsabschnitte zum Einlassende bzw. zum Auslassende bei der Schwingung der Schwingungsabschnitte das Material des Messrohrs auf Biegung schwingend beansprucht wird.

Dass, was zuvor beschrieben worden ist, hat den Vorteil, dass das Coriolis-Massedurchflussmessgerät bezüglich seiner Längserstreckung sehr kompakt gebaut werden kann und die Schwingung der Schwingungsabschnitte orthogonal zur Orientierung des Rohrleitungssystems erfolgt, so dass eine Störschwingung in dieser Richtung kaum entstehen kann.

Um bei erfindungsgemäßen Coriolis-Massedurchflussmessgeräten das Einwirken von externen Schwingungen zusätzlich zu reduzieren, geht ein weiterer erfindungsgemäßer Vorschlag dahin, die Schwingungsabschnitte in den beiden Seiten des Sockels jeweils mit mindestens einer Knotenplatte zu verbinden. Die Knotenplatten, die jeweils die horizontal verlaufenden Bereiche der Schwingungsabschnitte miteinander verbinden, reduzieren das Einwirken externer Schwingungen auf den Sockel bzw. das die gegenteiligen Schwingungen der Schwingungsabschnitte zueinander sich auf die Befestigung des Messrohrs im Sockel auswirkt.

Schließlich kann es vorteilhaft sein, die Realisierung erfindungsgemäßer Coriolis-Massedurchflussmessgeräte so vorzusehen, dass das Einlassende, Zwischenverteilerstrecken zwischen den Schwingungsabschnitten und das Auslassende eine gemeinsame Achse haben. Rechts und links dieser Achse verlaufen die Ebenen der Schwingungsabschnitte, so dass die Schwingungsabschnitte im Wesentlichen durch die Befestigung im Sockel um die gemeinsame Achse schwingen.

Im Einzelnen gibt es nun eine Vielzahl von Möglichkeiten das erfindungsgemäße Coriolis-Massedurchflussmessgerät auszugestalten und weiterzubilden. Dazu wird verwiesen auf die dem Patentanspruch 1 nachgeordneten Patentansprüche und die nachfolgende Beschreibung von bevorzugten Ausführungsbeispielen in Verbindung mit der Zeichnung. In der Zeichnung zeigen:
- Fig. 1: ein Ausführungsbeispiel eines erfindungsgemäßen Coriolis-Massedurchflussmessgeräts in perspektivischer Seitenansicht,
- Fig. 2: das Messrohr des Coriolis-Massedurchflussmessgeräts gemäß Fig. 1 in perspektivischer Seitenansicht,
- Fig. 3: ein weiteres Ausführungsbeispiel eines für ein erfindungsgemäßes Coriolis-Massedurchflussmessgerät geeigneten Messrohrs, und
- Fig. 4: nochmals ein weiteres Ausführungsbeispiel eines Messrohrs.

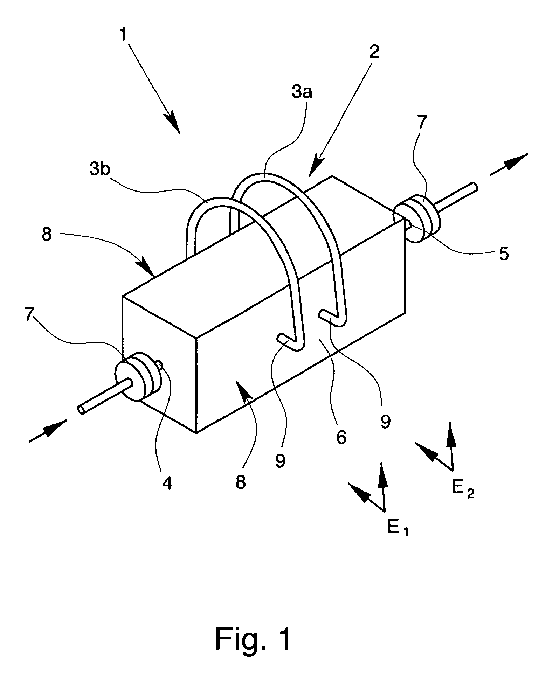

Fig. 1 zeigt ein Ausführungsbeispiel eines Coriolis-Massedurchflussmessgeräts 1 mit einem Messrohr 2 zur Bildung eines Strömungskanals, der von dem zu messenden Medium durchströmt wird. Nicht dargestellt sind die an den in parallelen Ebenen E₁, E₂ verlaufenden Schwingungsabschnitten 3 befestigten Schwingungserzeuger und Schwingungsaufnehmer. Der erste Schwingungsabschnitt 3a und der zweite Schwingungsabschnitt 3b können mit einem - nicht dargestellten - Schwingungserzeuger in gegenphasige Schwingungen versetzt werden. Das Messrohr 2 ist mit Ausnahme der Schwingungsabschnitte 3a, 3b, einem Einlassende 4 und einem Auslassende 5 innerhalb eines massiven Sockels 6 angeordnet. Am Einlassende 4 und am Auslassende 5 sind Flansche 7 vorgesehen, die der Verbindung des Coriolis-Massedurchflussmessgeräts 1 mit einem umgebenden Rohrleitungssystem dienen. Das Rohrleitungssystem ist nicht dargestellt.

Der Strömungskanal wird ausschließlich von dem einzigen Messrohr 2 gebildet, das im Wesentlichen innerhalb des Sockels 6 verläuft. Das Messrohr 2 ist von dem Material des Sockels 6 umgossen, der Sockel 6 umschließt fest anliegend das Messrohr. Der Sockel 6 hat in diesem Ausführungsbeispiel eine rechteckige Form. Die Schwingungsabschnitte 3a, 3b sind V-förmig gebogen und derart angeordnet, dass die Öffnungsseite der V-förmigen Schwingungsabschnitte 3a, 3b in Richtung des Sockels 6 orientiert sind. Die Schwingungsabschnitte 3a, 3b überragen den Sockel 6 quer zu seiner Längserstreckung, so dass die Schwingungsabschnitte 3a, 3b in den Seiten 8 in den Sockel 6 eintreten. Die horizontal verlaufenden Bereiche 9 der Schwingungsabschnitte 3a, 3b werden im Betriebszustand des Coriolis-Massedurchflussmessgeräts 1 auf Torsion belastet; sie sind bei diesem Ausführungsbeispiel orthogonal zur Orientierung des Einlassendes 4 und des Auslassendes 5 angeordnet.

Das Einlassende 4 und das Auslassende 5 des Messrohrs 2 liegen koaxial auf einer gemeinsamen Achse.

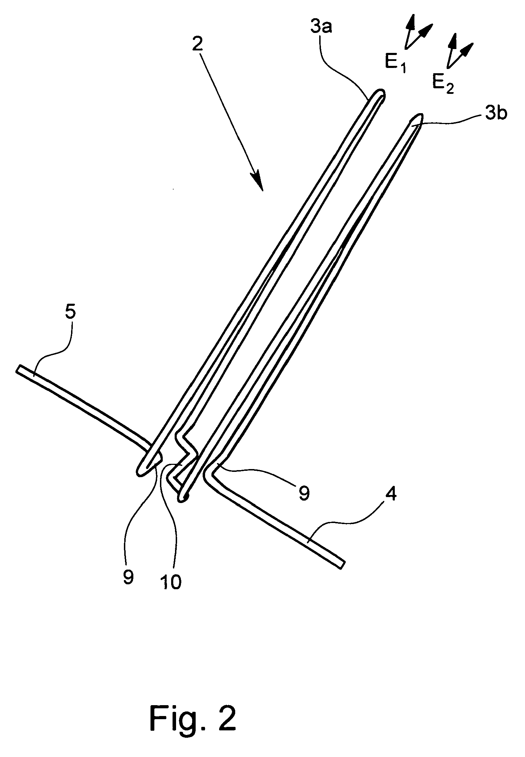

Fig. 2 zeigt das Messrohr 2 des Coriolis-Massedurchflussmessgeräts 1 gemäß der Fig. 1. Bei diesem Messrohr 2 sind die Schwingungsabschnitte 3a, 3b orthogonal zur Orientierung des Einlassendes 4 und des Auslassendes 5 angeordnet, und sie verlaufen in zwei parallelen Ebenen E₁, E₂. Mit Ausnahme der Schwingungsabschnitte 3a, 3b verlaufen sämtliche Abschnitte des Messrohrs 2, nämlich das Einlassende 4, die horizontalen Bereiche 9, der Zwischenverteilerstrecken 10 und das Auslassende 5 in einer gemeinsamen Ebene. Lediglich die Schwingungsabschnitte 3a, 3b ragen aus dieser Ebene heraus. Der Strömungskanal für das zu messende Medium wird vollständig von dem Messrohr 2 definiert.

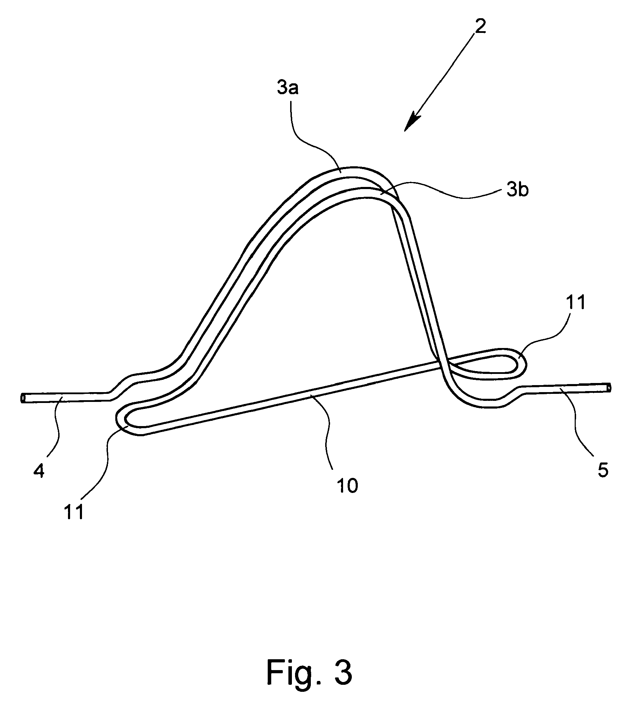

Fig. 3 zeigt ein weiteres Ausführungsbeispiel eines Messrohrs 2, bei dem die Schwingungsabschnitte 3a, 3b in gleicher Richtung orientiert sind, wie das Einlassende 4 und das Auslassende 5. Die Zwischenverteilerstrecke 10 erstreckt sich diagonal unter den Schwingungsabschnitten 3a, 3b hindurch und ist jeweils mit einer Verteilerschleife 11 mit dem ersten Schwingungsabschnitt 3a bzw. mit dem zweiten Schwingungsabschnitt 3b verbunden. Sowohl das Einlassende 4 als auch die Verteilerschleifen 11, die Zwischenverteilerstrecke 10 und das Auslassende 5 liegen in einer gemeinsamen Ebene.

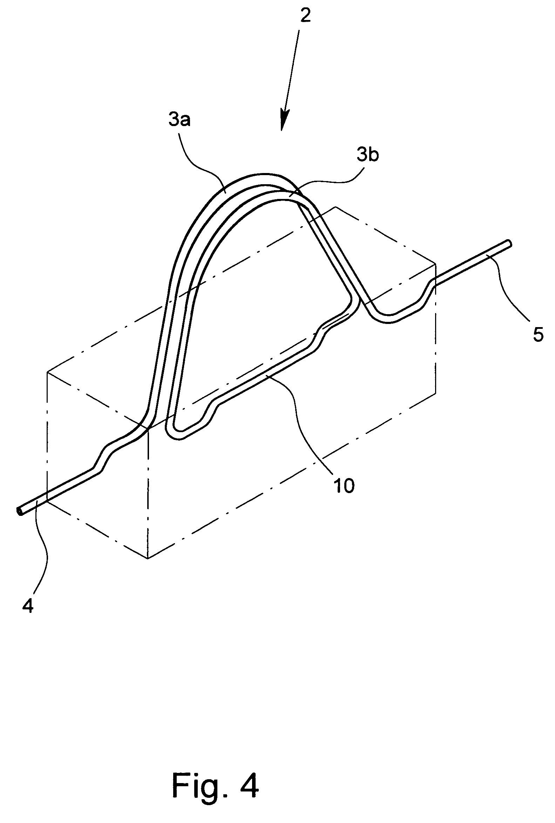

Ein weiteres Ausführungsbeispiel eines für ein erfindungsgemäßes Coriolis-Massedurchflussmessgerät geeigneten Messrohrs zeigt Fig. 4. Auch bei diesem Messrohr 2 liegen das Einlassende 4, die Zwischenverteilerstrecke 10 und das Auslassende 5 in einer gemeinsamen Ebene, und sie werden zumindest teilweise von dem nicht dargestellten Sockel 6 umschlossen. Bei diesem Ausführungsbeispiel liegen das Einlassende 4, die Zwischenverteilerstrecke 10 und das Auslassende 5 auf einer gemeinsamen Achse, was schwingungstechnische Vorteile mit sich bringt.

Abschließend sei darauf hingewiesen, dass sich auf alle in den Figuren 2 bis 4 dargestellten Messrohre 2 der in Fig. 1 dargestellte Sockel 6a anwenden lässt.

## Patentansprüche

1. Coriolis-Massedurchflussmessgerät, mit mindestens einem Messrohr zur Bildung eines Strömungskanals, mindestens einem Schwingungserzeuger, und mindestens einem Schwingungsaufnehmer, wobei das Messrohr ein Einlassende, zwei Schwingungsabschnitte und ein Auslassende aufweist und zumindest abschnittsweise derart gebogen ist, dass zwei in im Wesentlichen parallelen Ebenen verlaufende U- oder V-förmige Schwingungsabschnitte gebildet sind, und wobei die Schwingungsabschnitte durch den Schwingungserzeuger zu Schwingungen anregbar sind, wobei der Strömungskanal mit Ausnahme des Einlassendes der Schwingungsabschnitte und des Auslassendes innerhalb eines Sockels verläuft,
**dadurch gekennzeichnet,**
**dass** ein einziges Messrohr (6) vorhanden ist und der Strömungskanal vollständig von dem Messrohr (2) gebildet wird, und dass das Messrohr (2) von dem Material des Sockels (6) umgossen ist, so dass der Sockel (6) das Messrohr (2) fest anliegend umschließt.

2. Coriolis-Massedurchflussmessgerät nach Anspruch 1, **dadurch gekennzeichnet, dass** die Schwingungsabschnitte (3a, 3b) des Messrohrs (2) derart gebogen und angeordnet sind, dass die Öffnungsseiten der U- oder V-förmigen Schwingungsabschnitte (3a, 3b) in Richtung des Sockels (6) orientiert sind.

3. Coriolis-Massedurchflussmessgerät nach Anspruch 1 oder 2, **dadurch gekennzeichnet, dass** das Messrohr (2) derart gebogen und angeordnet ist, dass das Einlassende (4) und das Auslassende (5) koaxial zueinander verlaufen.

4. Coriolis-Massedurchflussmessgerät nach einem der Ansprüche 1 bis 3, dadurch gekennzeichet, dass mit Ausnahme der Schwingungsabschnitte (3a, 3b) des Messrohrs (2), sämtliche Abschnitte des Messrohrs (2) in einer gemeinsamen Ebene angeordnet sind.

5. Coriolis-Massedurchflussmessgerät nach einem der Ansprüche 1 bis 4, **dadurch gekennzeichnet, dass** die Ebenen der Schwingungsabschnitte (3a, 3b) orthogonal zur Orientierung des Einlassendes (4) und des Auslassendes (5) verlaufen.

6. Coriolis-Massedurchflussmessgerät nach Anspruch 5, **dadurch gekennzeichnet, dass** das Messrohr (2) mit den Schwingungsabschnitten (3a, 3b) an zwei gegenüberliegenden Seiten in den Sockel (6) eintritt.

7. Coriolis-Massedurchflussmessgerät nach Anspruch 5 oder 6, **dadurch gekennzeichnet, dass** die Schwingungsabschnitte (3a, 3b) in beiden Seiten (8) des Sockels (6) jeweils mit mindestens einer Knotenplatte verbunden sind.

8. Coriolis-Massedurchflussmessgerät nach einem der Ansprüche 1 bis 4, **dadurch gekennzeichnet, dass** die Schwingungsabschnitte (3a, 3b) in einer parallellen Ebene zum Einlassende (4) und zum Auslassende (5) angeordnet sind.

## Claims

1. Coriolis mass flowmeter, with at least one measurement tube for forming a flow channel, at least one vibration generator and at least one vibration pick-up, the measurement tube having one inlet end, two vibration sections and one outlet end and being bent at least in sections such that two U-shaped or V-shaped vibration sections which run in essentially parallel planes are formed, the vibration sections being excited to vibrations by the vibration generator, the flow channel, except for the inlet end, the vibrations sections and the outlet end running within a base
**characterized in that**
a single measurement tube (2) is provided and the flow channel is formed entirely by the measurement tube (2) and that the measurement tube (2) is cast from the material of the base (6), so that the base (6) surrounds the measurement tube (2), adjoining it tightly.

2. Coriolis mass flowmeter according to claim 1, **characterized in that** the vibration sections (3a, 3b) of the measurement tube (2) are bent and arranged such that the opening sides of the U-shaped or V-shaped vibration sections (3a, 3b) are oriented in the direction of the base (6).

3. Coriolis mass flowmeter according to claim 1 or 2, **characterized in that characterized in that** the measurement tube (2) is bent and arranged such that the inlet end (4) and the outlet end (5) run coaxially to one another.

4. Coriolis mass flowmeter according to any one of claims 1 to 3, **characterized in that**, except for the vibration sections (3a, 3b) of the measurement tube (2), all sections of the measurement tube (2) are located in a common plane.

5. Coriolis mass flowmeter according to any one of claims 1 to 4, **characterized in that** the planes of the vibration sections (3a, 3b) run orthogonally to the orientation of the inlet end (4) and of the outlet end (5).

6. Coriolis mass flowmeter according to claim 5, **characterized in that** the measurement tube (2) with the vibration sections (3a, 3b) enters the base (6) on two opposite sides.

7. Coriolis mass flowmeter according to claim 5 or 6, **characterized in that** the vibration sections (3a, 3b) in both sides (8) of the base (6) are each connected to at least one node plate at a time.

8. Coriolis mass flowmeter according to any one of claims 1 to 4, **characterized in that** the vibration sections (3a, 3b) are arranged in a plane parallel to the inlet end (4) and to the outlet end (5).

## Revendications

1. Débitmètre massique Coriolis, avec au moins un tube de mesure pour la formation d'un canal d'écoulement, au moins un générateur d'oscillations, et au moins un capteur d'oscillations, dans lequel le tube de mesure présente une extrémité d'entrée, deux sections d'oscillation et une extrémité de sortie et est au moins localement courbé, de telle manière que soient formées deux sections d'oscillation en forme de U ou de V s'étendant dans deux plans essentiellement parallèles, et dans lequel les sections d'oscillation peuvent être mises en état d'excitation par le générateur d'oscillations, dans lequel le canal d'écoulement s'étend à l'intérieur d'un socle à l'exception de l'extrémité d'entrée, des sections d'oscillation et de l'extrémité de sortie, **caractérisé en ce qu'**il se trouve un seul tube de mesure (6) et le canal d'écoulement est formé entièrement par le tube de mesure (2), et **en ce que** le tube de mesure (2) est enrobé par le matériau du socle (6), de telle manière que le socle (6) enveloppe de façon solidement appliquée le tube de mesure (2).

2. Débitmètre massique Coriolis selon la revendication 1, **caractérisé en ce que** les sections d'oscillation (3a, 3b) du tube de mesure (2) sont courbées et disposées de telle manière que les côtés d'ouverture des sections d'oscillation en forme de U ou de V (3a, 3b) soient orientées en direction du socle (6).

3. Débitmètre massique Coriolis selon la revendication 1 ou 2, **caractérisé en ce que** le tube de mesure (2) est courbé et disposé de telle manière que l'extrémité d'entrée (4) et l'extrémité de sortie (5) soient coaxiales l'une à l'autre.

4. Débitmètre massique Coriolis selon l'une quelconque des revendications 1 à 3, **caractérisé en ce que** toutes les sections du tube de mesure (2), à l'exception des sections d'oscillation (3a, 3b) du tube de mesure (2), sont disposées dans un plan commun.

5. Débitmètre massique Coriolis selon l'une quelconque des revendications 1 à 4, **caractérisé en ce que** les plans des sections d'oscillation (3a, 3b) s'étendent orthogonalement à l'orientation de l'extrémité d'entrée (4) et de l'extrémité de sortie (5).

6. Débitmètre massique Coriolis selon la revendication 5, **caractérisé en ce que** le tube de mesure (2) pénètre avec les sections d'oscillation (3a, 3b) dans le socle (6) sur deux côtés opposés.

7. Débitmètre massique Coriolis selon la revendication 5 ou 6, **caractérisé en ce que** les sections d'oscillation (3a, 3b) sont raccordées dans les deux côtés (8) du socle (6) chaque fois avec au moins une plaque de noeud.

8. Débitmètre massique Coriolis selon l'une quelconque des revendications 1 à 4, **caractérisé en ce que** les sections d'oscillation (3a, 3b) sont disposées dans un plan parallèle à l'extrémité d'entrée (4) et à l'extrémité de sortie (5).
